# EUROPEAN PATENT SPECIFICATION

(11) **EP 2 870 060 B1**
(45) Date of publication and mention of the grant of the patent: **28.09.2016**
(21) Application number: 13762251.0
(22) Date of filing: 02.07.2013
(51) Int. Cl.: B62K 5/05, B62K 5/01, B62K 5/10, B62K 5/027, B60G 17/00, B60G 17/016

(54) **TILTING VEHICLE**
NEIGEFAHRZEUG
VEHICULE INCLINABLE

(30) Priority: 04.07.2012 IT BA20120044
(43) Date of publication of application: 13.05.2015
(73) Proprietor: SASP Innovation S.r.l., 73013 Galatina (IT)
(72) Inventor: SPONZIELLO, Antonio, I-73013 Galatina (Lecce) (IT); SANTANDREA, Alessia, I-73013 Galatina (Lecce) (IT)
(74) Representative: Conversano, Gabriele
(86) International application number: PCT/IB2013/055435
(87) International publication number: WO 2014/006573

(56) References cited:
- EP-A1- 2 368 729
- WO-A1-2010/015986

## Description

The present invention relates to a tilting vehicle having at least three wheels, two of them being steering wheels and being arranged on the same axle. For simplicity, in the following and in the drawings it is referred to a tilting vehicle having two steering front wheels and one driving rear wheel. According to the present invention, with tilting vehicle with two front steering wheels and one rear it is intended a vehicle which during cornering can be tilted inward the curve so that the centrifugal force can be balanced by the weight of vehicle and driver. In practice, it is a motorbike having two front steering wheels instead of only one. The advantage of using two front wheels instead of one consists substantially in a greater stability during straight running and cornering, since the probability of the front wheels to lose the adherence or the contact with the road is lower.

At the state of the art, there are known many embodiments of tilting vehicles and in particular of tilting three-wheeled vehicles. Some examples are described in documents EP 1484239, WO 2012/007819, EP 1180476 and EP 2368729.

For example, in EP 1484239 it is described a tilting three-wheeled vehicle with two front steering wheels, comprising a frame, a handlebar, a rear wheel rotating with respect to the frame and a steering front unit, characterized in that there are provided two horizontal crossbars connected by means of hinges to two side head tubes (to which the steering front wheels are constrained) and by means of other hinges to the frame.

It is substantially used a linkage known as "four bar linkage" which has some drawbacks in terms of dimensions. As yet described, it is in fact needed to use two horizontal crossbars for the transmission of the roll motion from the frame to the steering front wheels.

Another embodiment can be found in WO 2010015986, on which the preamble of claim 1 is based, in which it is described a tilting system for a vehicle with three wheels, of which two are coupled on the same axle, characterized in that it comprises a four bar linkage for the connection of each wheel coupled on the same axle to the frame of the vehicle.

In almost all the documents known at the state of the art it is provided the usage of a four bar linkage which needs two rigid crossbars to be used, thus resulting in some constraints in the terms of vehicle design, which are linked to dimensions and arrangement of components.

Therefore, aim of the present invention is to provide a tilting vehicle which does not use the linkage known as four bar linkage for the transmission of the roll motion from the frame to the steering wheels but which uses a kinematic group which, as it is better described in the following, allows greater design freedom.

According to another aspect, aim of the present invention is to provide a tilting vehicle comprising a mechanical assembly not using the four bar linkage.

In accordance with the present invention there is provided a tilting vehicle as set out in independent claim 1. Preferred embodiments of the present invention are laid down in the appended dependent claims 2-14.

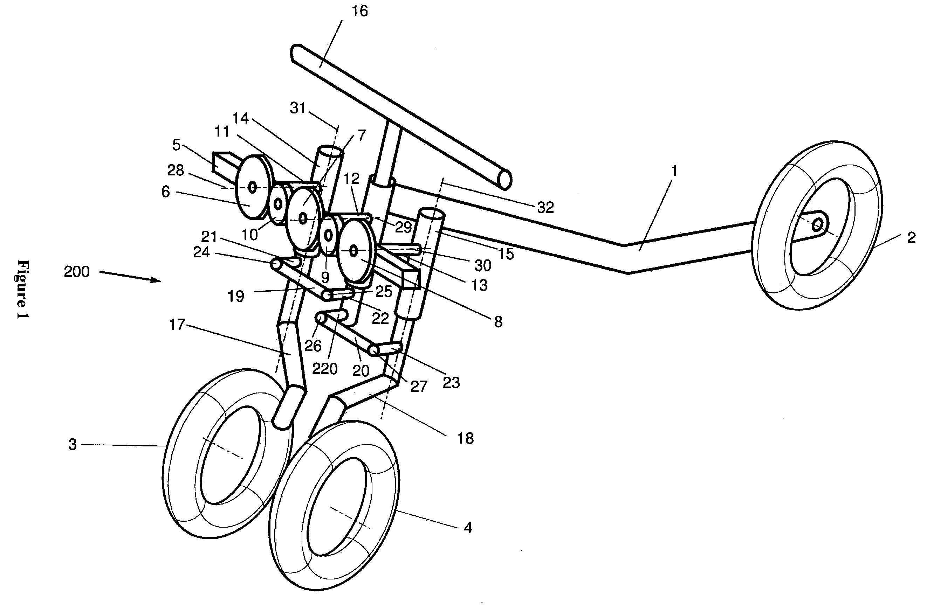

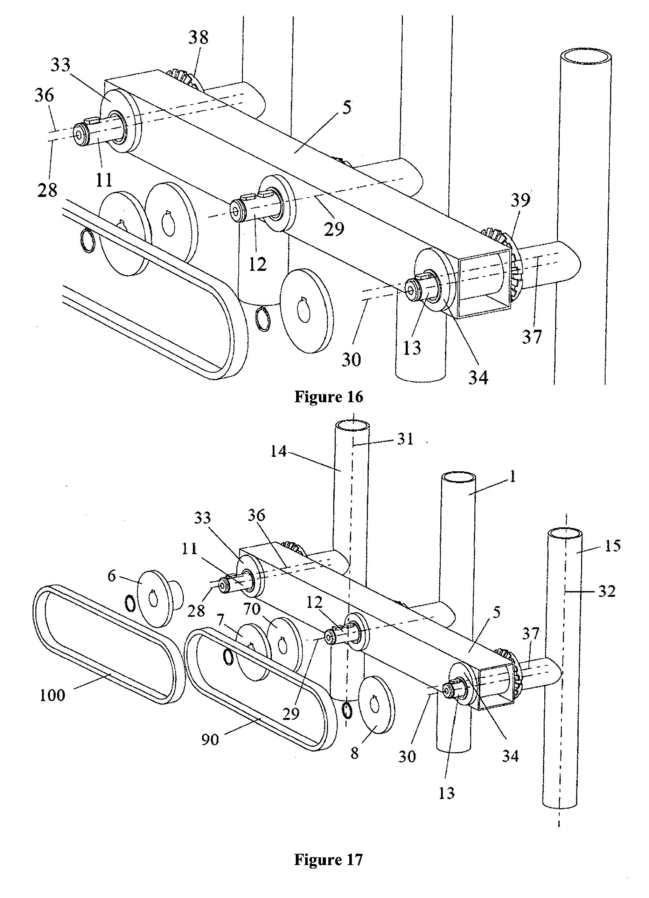

These and other advantages will be clearer from the detailed description of the invention, which refers to the appended figures 1 to 17.
In figures 1 to 3, there are shown two preferred embodiments of the present invention.

Figure 1 shows a vehicle (200) comprising a frame (1) to which it is constrained a rear wheel (2), and by means of a mechanical assembly, better described in the following, two steering front wheels (3, 4).

Said steering front wheels (3, 4) are constrained by means of independent suspensions to two side steering tubes (17, 18), which in turn are constrained to two side head tubes (14, 15) by means of cylindrical hinges. The axes (31, 32) of such cylindrical hinges represent the steering axes of the two front wheels (3, 4).

In the appended figures, for simplicity there are not shown the possible independent front suspensions of the vehicle which connect the hubs of the front wheels (3, 4) to the respective side steering tubes (17, 18), since they can be similar to any front suspension of motorbikes. For the same reason, there are not represented the front shock absorbers and the possible rear suspension of the vehicle which connects the hub of the rear wheel to the frame.

The front mechanical assembly comprises a handlebar (16) constrained to the frame (1) by means of a cylindrical hinge. To the handlebar (16) there are connected means (19, 20, 21, 22, 220, 23, 24, 25, 26, 27) for the transmission of steering motion to the front wheels (3, 4). In figure 1 it is shown a transmission of steering motion carried out by means of steering levers (21, 22, 220, 23) constrained to two tie rods/struts (19, 20) by means of spherical hinges (24, 25, 26, 27). Other linkages known at the state of the art for the transmission of steering motion can be used in association with the mechanical assembly according to the present invention.

The transmission of roll motion from the frame (1) to the side head tubes (14, 15) occurs by means of a linkage comprising a rigid crossbar (5) to which there are hinged three pinions (6, 7, 8) solidly constrained to the frame (1) and to the side head tubes (14, 15) and means for the transmission of rotational motion from the pinion (7) constrained to the frame (1) to the pinions (6, 8) constrained to the side head tubes (14, 15).

Conveniently, the pinions (6, 7, 8) can be keyed on the shafts (11, 12, 13), which in turn are hinged to the crossbar (5) and solidly constrained to the frame (1) and to the side head tubes (14, 15), as it is shown in figure 1.

The rigid crossbar (5) constrains the relative positions of the pinions (6, 7, 8) while does not constrain the rotation of the same. The means for transmission of rotational motion between the pinions can comprise idle wheels (9, 10) as it is shown in figures 1 and 2, or a chain or belt (150), as it is shown in figure 3.

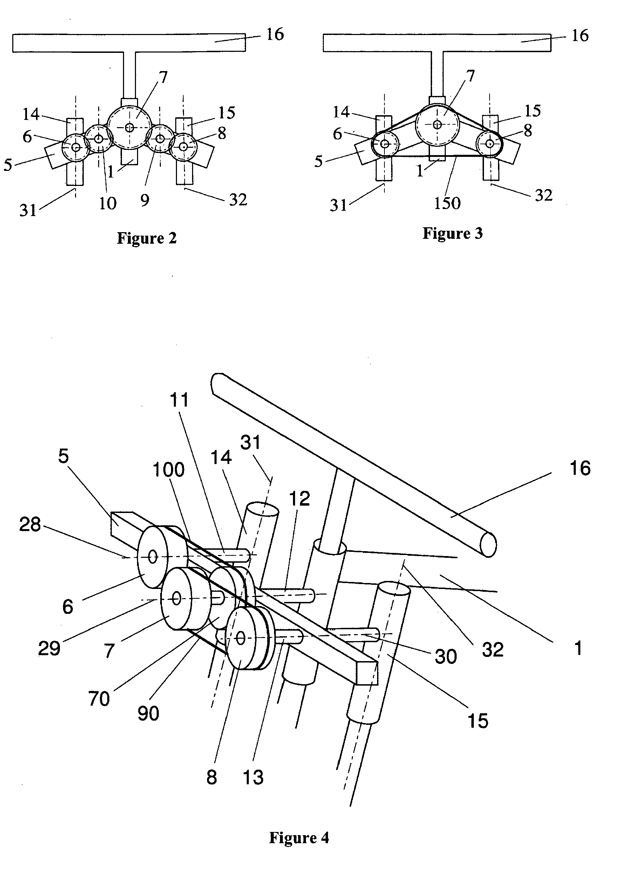

Conveniently, in case of using chains or belts as means for transmission of rotational motion between pinions, on the shaft (12) it can be needed that two pinions (7, 70) are to be keyed, instead of one, as it is shown in figures 4, 6, 8, 10 and 13. In this way, a chain or belt (90) transmits the motion from the pinion (7) to the pinion (8), while another chain or belt (100) transmits the motion from the pinion (70) to the pinion (6). Such measure cannot be needed when the axes (28, 29, 30) of the pinions are not coplanar, as it is shown in figure 3.

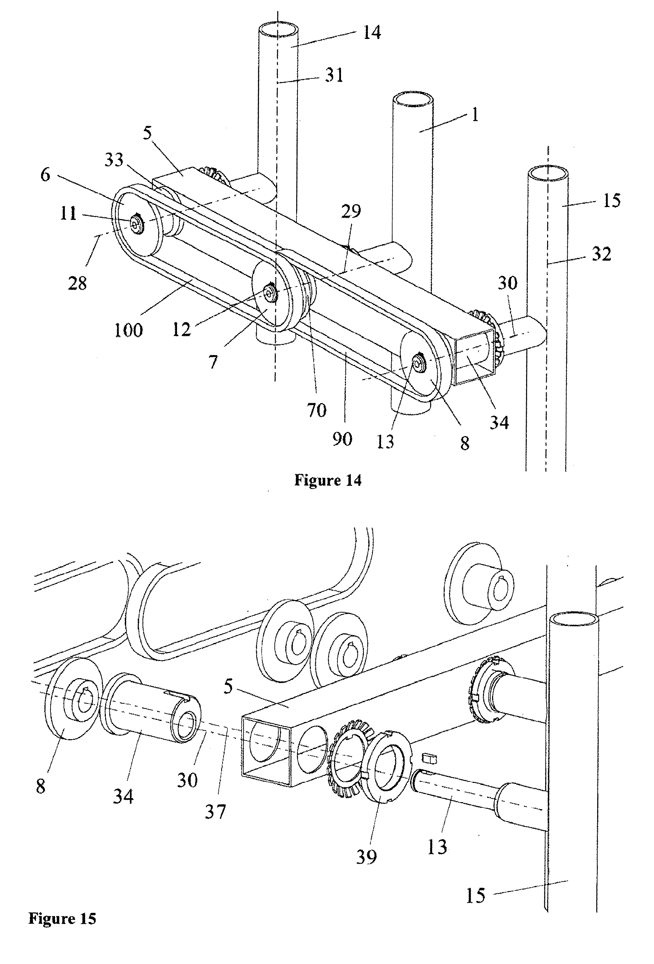

Other details of a preferred embodiment in case of using chains or belts for the transmission of the rotational motion between the pinions are shown in the following figures 14 to 17, which show three exploded views and an assembled one of the embodiment.

As it is shown, the constrain to the rigid crossbar (5) of the shafts (11, 13), on which the pinions (6, 8) are keyed, can occur by means of bushings (33, 34) which are provided with a hole, whose axis (28, 30) is eccentric with respect to respective axes (36, 37) of the same bushings. The bushings (33, 34), which are provided with an enlargement in the front part which works as a stop, can be introduced in suitable holes provided in the crossbar (5), in which they are free to rotate. The relative rotation of the bushings (33, 34) with respect to the crossbar (5) can be blocked by means of lock nuts (38, 39) with respective locking washers.

Other means for blocking the relative rotation of the bushings (33, 34) with respect to the rigid crossbar (5) can be conveniently used. As it is shown in figures 14 to 17, the shafts (11, 13) solidly constrained to the side head tubes (14, 15) are housed in the eccentric holes provided in the bushings (33, 34) (introduced in turn in corresponding holes of the crossbar (5)) and the pinions (6, 8) are keyed on the shafts (11, 13) (for example by means of keys) and blocked axially with means known at the state of the art as retaining rings.

Once the system is assembled in this way, it is clear that a rotation of the bushings (33, 34) inside the holes provied in the crossbars (5) will cause a shifting of the axes (28, 30) of the shafts (11, 13) and so of the pinions (6, 8), from the rotational axis (29) of the central pinions (7, 70). Therefore after assembling the system and introducing the transmission belts (or chains) (90, 100), it is possible that the belts (or chains) are suitably tensioned by rotating the bushings (33, 34) and in the following by tightening the lock nuts (38, 39) to block the relative rotation of bushings with respect to the crossbar (5). Conveniently, in order to transmit the motion from the central pinion to the side ones, other transmission means and kinematic configurations can be used, as for example, the use of a rack or the use of further pinions and/or gears.

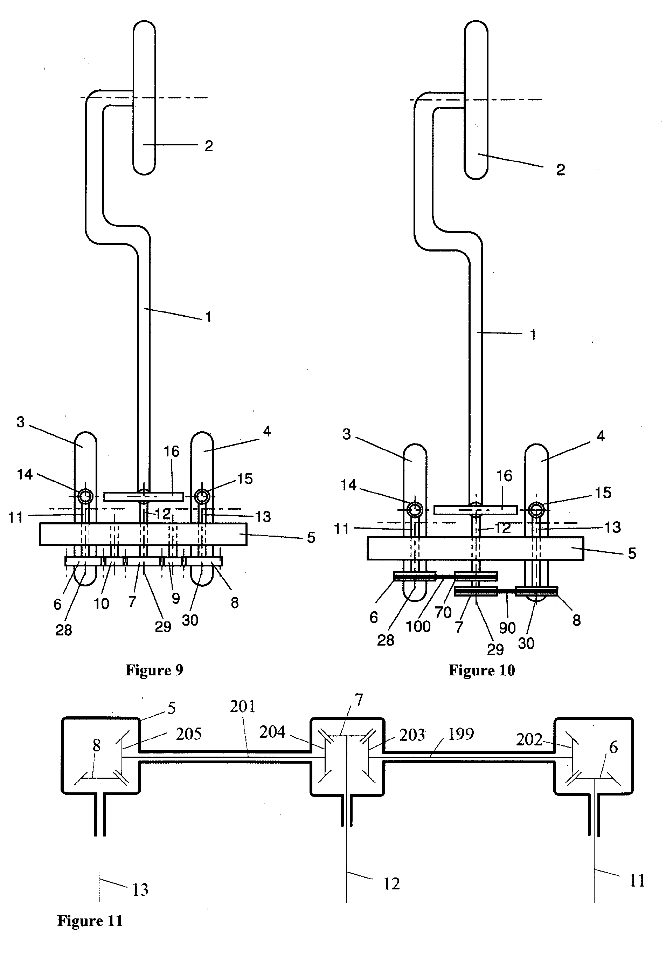

For example, as it is shown in figure 11, the pinions (6, 7, 8) can be bevel gears, and the transmission of motion from the pinion (7) constrained to the frame (1) to the pinions (6, 8) constrained to said side head tubes (14, 15) can occur by means of shafts (199, 201) rotatable constrained to the crossbar (5) and to whose ends the bevel gears (202, 203, 204, 205), meshing with the pinions (6, 7, 8), are keyed.

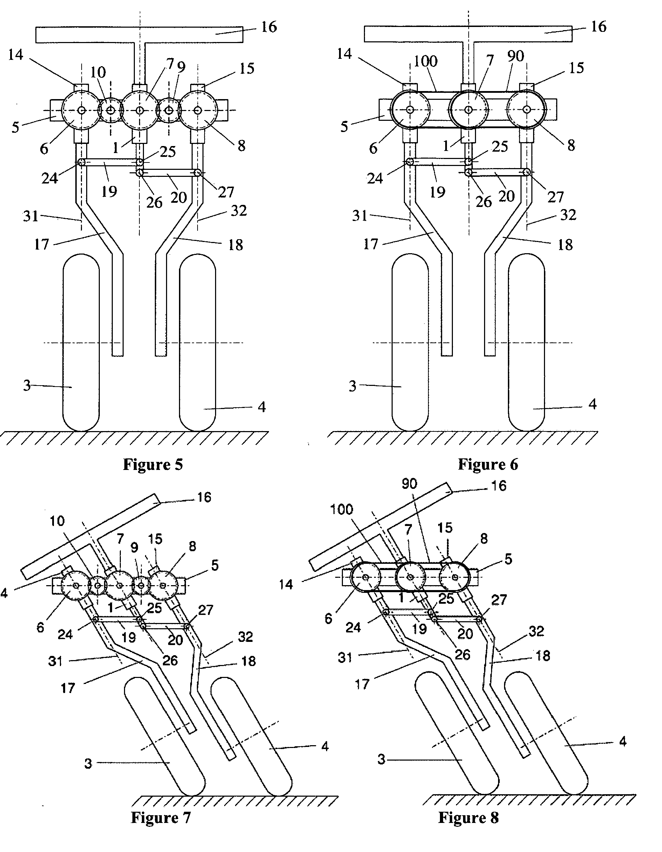

In this way the aim of constraining the roll motion of the side head tubes (14, 15) to the one of the frame (1) without using a four bar linkage is reached, and by using only one rigid crossbar (5). Conveniently, it is possible to provide the vehicle with devices able to block the relative rotation of the crossbar (5) with respect to the frame (1) and so the roll motion of the vehicle. Such devices, suitably activated by the user, can be used to facilitate the stop and re-start steps, besides the vehicle parking, since they avoid its fall. According to a preferred embodiment the axes (28, 30) of the two pinions (6, 8) constrained to the side head tubes (14, 15) are in the middle planes of the front wheels (3, 4) and are coplanar with the axis (29) of the pinion (7) constrained to the frame (1) and the transmission ratio between the central pinion (7) and the side ones (6, 8) is equal to 1 (figures 5 and 6). With this configuration during cornering the middle planes of the front wheels and the one of the rear wheel remain parallel and equidistant between each other (figures 7 and 8).

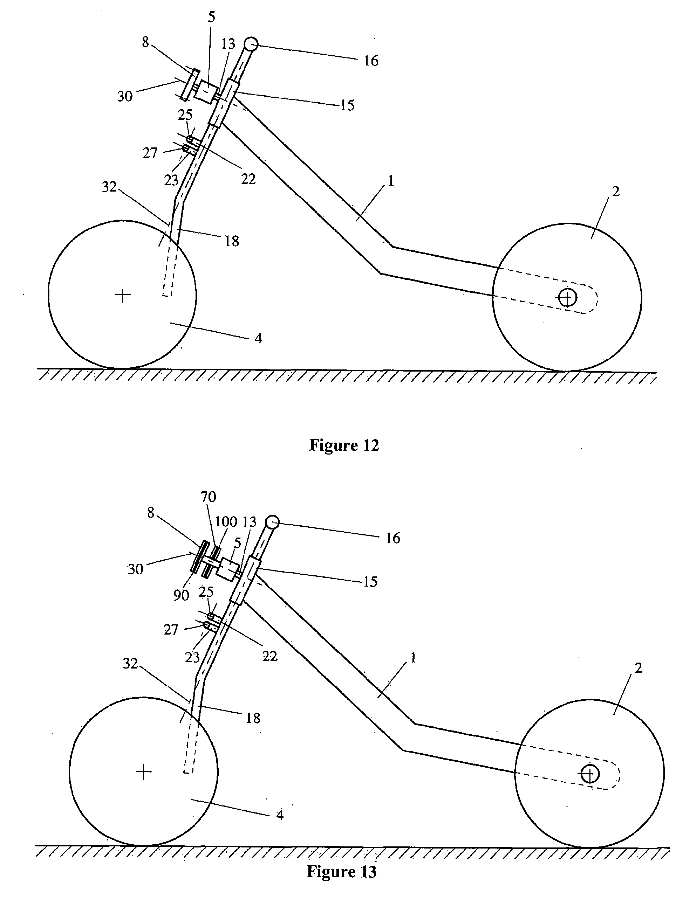

For this particular kinematic configuration it is appended a perspective view of the vehicle (figures 1 and 4), a front one during straight running (figure 5 and 6), a front one during cornering (figures 7 and 8), a top view (figures 9 and 10) and a side view (figures 12 and 13).

According to other preferred embodiments, the axes of the two pinions (6, 8) constrained to the side head tubes (14, 15) are not coplanar with the axis of the central pinion (7) and/or the transmission ratio between side pinions and the central one is other than 1 (figures 2 and 3).

What is described and shown in the appended figures represents the description of preferred embodiments of the invention defined in the following claims.

## Claims

1. Tilting vehicle (200) with at least three wheels (2,3,4), two (3, 4) of them being steering and arranged on the same axle, comprising:
- a handlebar (16) constrained to the frame (1) of said tilting vehicle by means of a cylindrical hinge;
- two side head tubes (14, 15), to which are constrained, by means of cylindrical hinges, two side steering tubes (17, 18) to which said steering wheels (3, 4) are constrained;
- means (19, 20, 21, 22, 220, 23, 24, 25, 26, 27) for the transmission of the steering motion from the handlebar (16) to said steering wheels (3, 4);
**characterized in that** a first pinion (7) is solidly constrained to the frame (1), and two further pinions (6, 8), configured to rotate with axes (28,30) parallel to the axis (29) of said first pinion (7), are solidly constrained to said side head tubes (14, 15), the relative position of the axes (28, 29, 30) of said first and two further pinions (6, 7, 8) being defined by a rigid crossbar (5) to which said first and two further pinions (6, 7, 8) are rotatable constrained, and **in that**
said vehicle further comprises means for the transmission of motion from said first pinion (7) to said two further pinions (6, 8) constrained to
said side head tubes (14, 15).

2. Vehicle according to claim 1, **characterized in that** said first and two further pinions (6, 7, 8) are keyed on shafts (11, 12, 13), which are hinged to said rigid crossbar (5) and solidly constrained to the head tubes (14, 15) and to the frame (1).

3. Vehicle according to claim 1 or 2, **characterized in that** said means for the transmission of motion comprise a chain or belt (150) or a rack or idle wheels (9, 10) hinged to said rigid crossbar (5) for the transmission of motion from said first pinion (7) constrained to the frame (1) to said two further pinions (6, 8) constrained to said side head tubes (14, 15).

4. Vehicle according to claim 1 or 2, **characterized in that** said first and two further pinions (6, 7, 8) are bevel gears and the transmission of motion between said first pinion (7) constrained to the frame (1) and said two further pinions (6, 8) constrained to said side head tubes (14, 15) occurs by means of two shafts (199, 201) rotatable constrained to the crossbar (5) and to whose ends further bevel gears (202, 203, 204, 205), meshing with said first and two further pinions (6, 7, 8), are keyed.

5. Vehicle according to claim 2, further comprising a second pinion (70) keyed on the same supporting shaft (12) of said first pinion (7) constrained to the frame and **characterized in that** a first chain or belt (90) is configured to transmit the motion from the first pinion (7) constrained to the frame to one (8) of the two further pinions (6, 8) constrained to a first side head tube (15) and a second chain or belt (100) is configured to transmit the motion from the second pinion (70) constrained to the frame to the other (6) of the two further pinions (6, 8) constrained to a second side head tube (14).

6. Vehicle according to any one of the preceding claims, **characterized in that** each of said steering wheels (3, 4) arranged on the same axle is constrained to the respective side steering tube (17, 18) by means of an independent suspension.

7. Vehicle according to any one of the preceding claims, **characterized in that** said axle on which said steering wheels (3, 4) are arranged is the front axle of the vehicle.

8. Vehicle according to any one of the preceding claims, **characterized in that** the axes (28, 29, 30) of said first and two further pinions (6, 7, 8) are coplanar.

9. Vehicle according to any one of claims 1 to 7, **characterized in that** the axes (28, 29, 30) of said first and two further pinions (6, 7, 8) are not coplanar.

10. Vehicle according to any one of the preceding claims, **characterized in that** the motion transmission ratio between said first pinion (7) constrained to the frame (1) and said two further pinions (6, 8) constrained to said side head tubes (14, 15) is equal to 1.

11. Vehicle according to any one of claims 1 to 9, **characterized in that** the motion transmission ratio between said first pinion (7) constrained to the frame (1) and said two further pinions (6, 8) constrained to said side head tubes (14, 15) is other than 1.

12. Vehicle according to any one of the preceding claims, **characterized in that** the distance of the axes (28, 30) of said two further pinions (6, 8) constrained to said side head tubes (14, 15) from the axis (29) of said first pinion (7) constrained to the frame is adjustable.

13. Vehicle according to claim 12, **characterized in that** said two further pinions (6, 8) are rotatable constrained to bushings (33, 34), free to rotate about their axes (36, 37) in suitable holes in the crossbar (5) and provided with means (38, 39) to block the relative angular position of said bushings with respect to the crossbar (5), the rotational axes of said two further pinions (6, 8) being not coincident with the rotational axes (36, 37) of said bushings (33, 34).

14. Vehicle according to any one of the preceding claims, further comprising means for blocking the rotation of the crossbar (5) with respect to the frame (1).

## Patentansprüche

1. Kippfahrzeug (200) mit mindestens drei Rädern (2, 3, 4), wobei zwei (3, 4) von denen gelenkt und auf der gleichen Achse angeordnet sind, umfassend:
- einen Lenker (16) der mit dem Rahmen (1) des besagten Kippfahrzeugs mittels eines zylindrischen Scharniers verbunden ist;
- zwei seitliche Kopfrohre (14, 15), mit denen mittels zylindrischer Scharniere zwei seitliche Lenkrohre (17, 18) verbunden sind, mit denen die besagten gelenkten Räder (3, 4) verbunden sind;
- Mittel (19, 20, 21, 22, 220, 23, 24, 25, 26, 27), um die Lenkbewegung von der Lenkstange (16) an den besagten Lenkrädern (3, 4) zu übertragen;
**dadurch gekennzeichnet, dass**
ein erstes Ritzel (7) fest mit dem Rahmen (1) befestigt ist, und zwei andere Ritzel (6, 8) derart ausgebildet sind, dass sie mit Achsen (28, 30) parallel zur Achse (29) des besagten ersten Ritzels (7) drehen können und mit den besagten Kopfseitenrohren (14, 15) fest gebunden sind, wobei die relative Lage der Achsen (28, 29, 30) der besagten ersten und der zwei anderen Ritzeln (6, 7, 8) durch einen starren Querträger (5) definiert ist, mit der die besagten ersten und die zwei anderen Ritzeln (6, 7, 8) drehbar verbunden sind,
und dass
jedes Fahrzeug ferner Mittel zum Übertragen einer Bewegung von dem besagten ersten Ritzel (7) zu den besagten zwei weiteren Ritzeln (6, 8) aufweist, die mit den besagten Kopfseitenrohren (14, 15) verbunden sind.

2. Fahrzeug nach Anspruch 1, **dadurch gekennzeichnet, dass** das besagte erste und die besagten zwei weitere Ritzel (6, 7, 8) auf Wellen (11, 12, 13) verkeilt sind, die gelenkig mit dem besagten starren Querträger (5) und an den Kopfrohren (14, 15) und dem Rahmen (1) fest gebunden sind.

3. Fahrzeug nach Anspruch 1 oder 2, **dadurch gekennzeichnet, dass** die besagten Mittel für die Übertragung einer Bewegung entweder eine Kette oder einen Riemen (150) oder eine Zahnstange oder Leerlaufräder (9, 10)umfassen, die in dem besagten starren Querträger (5) für die Übertragung einer Bewegung aus dem besagten ersten Ritzel (7), der mit dem Rahmen (1) verbunden ist, an die zwei weiteren Ritzel (6, 8), die mit den besagten seitlichen Kopfrohren (14, 15) verbunden sind.

4. Fahrzeug nach Anspruch 1 oder 2, **dadurch gekennzeichnet , dass** das besagte erste und die besagten zwei weiteren Ritzel (6, 7, 8) Kegelräder sind und die Übertragung der Bewegung zwischen dem besagten ersten Ritzel (7), das mit dem Rahmen (1) verbunden ist, und den zwei weiteren Ritzeln (6, 8), die mit den besagten Kopfrohren (14, 15) verbunden sind, durch zwei Wellen bewirkt wird (199, 201), die mit dem Querträger (5) drehbar sind und an deren Enden weitere Kegelräder (202, 203, 204, 205) verkeilt sind, die mit den besagten ersten und den besagten zwei weiteren Zahnrädern (6, 7, 8) kämmen.

5. Fahrzeug nach Anspruch 2, ferner mit einem zweiten Ritzel (70), das auf derselben Lagerwelle (12) des besagten ersten Ritzels (7) verkeilt ist, das mit dem Rahmen verbunden ist und **dadurch gekennzeichnet ist, dass** eine erste Kette oder Riemen (90) derart konfiguriert ist, dass sie die Bewegung von dem ersten Ritzel (7), das mit dem Rahmen verbunden ist, an einem (8) der zwei weiteren Ritzel (6, 8), die mit einem ersten seitlichen Kopfrohre (15) verbunden ist, und eine zweite Kette oder Riemen (100) derart konfiguriert ist, dass sie die Bewegung von dem zweiten Ritzel (70), das an dem Rahmen gebunden ist, an einem (6) der zwei weiteren Ritzel (6, 8) übertragen, die mit einem zweiten seitlichen Kopfrohre (14) verbunden sind.

6. Fahrzeug nach einem der vorhergehenden Ansprüche, **dadurch gekennzeichnet, dass** jedes der besagten gelenkten Räder (3, 4), die auf der gleichen Achse angeordnet sind, mit dem jeweiligen seitlichen Lenkrohre (17, 18) durch eine unabhängige Aufhängung, verbunden sind.

7. Fahrzeug nach einem der vorhergehenden Ansprüche, **dadurch gekennzeichnet, dass** die besagte Achse, auf der die besagten gelenkten Räder (3, 4) angebracht sind, die vordere Achse des Fahrzeugs ist.

8. Fahrzeug nach einem der vorhergehenden Ansprüche, **dadurch gekennzeichnet, dass** die Achsen (28, 29, 30) der besagten ersten und der besagten zwei weiteren Ritzeln (6, 7, 8) koplanar sind.

9. Fahrzeug nach einem der Ansprüche 1 bis 7, **dadurch gekennzeichnet, dass** die Achsen (28, 29, 30) der besagten ersten und der besagten zwei weiteren Ritzeln (6, 7, 8) nicht koplanar sind.

10. Fahrzeug nach einem der vorhergehenden Ansprüche, **dadurch gekennzeichnet, dass** das Bewegungsübersetzungsverhältnis zwischen dem besagten ersten Ritzel (7), das mit dem Rahmen (1) verbunden ist, und den besagten zwei weiteren Ritzeln (6, 8), die mit den besagten seitlichen Kopfrohren (14, 15) verbunden sind, gleich 1 ist.

11. Fahrzeug nach einem der Ansprüche 1 bis 9, **dadurch gekennzeichnet, dass** das Bewegungsübersetzungsverhältnis zwischen dem besagten ersten Ritzel (7), das mit dem Rahmen (1) verbunden ist, un den besagten zwei weiteren Ritzeln (6, 8), die mit den besagten seitlichen Kopfrohren (14, 15) verbunden sind, von 1 verschieden ist.

12. Fahrzeug nach einem der vorhergehenden Ansprüche, **dadurch gekennzeichnet, dass** der Abstand der Achsen (28, 30) der besagten zwei weiteren Ritzel (6, 8), die mit den besagten seitlichen Kopfrohren (14, 15) verbunden sind, mit Bezug auf der Achse (29) des besagten ersten Ritzels (7), das mit dem Rahmen verbunden ist, einstellbar ist.

13. Fahrzeug nach Anspruch 12, **dadurch gekennzeichnet , dass** die besagten zwei weiteren Ritzel (6, 8) drehbar mit Lagerbuchsen (33, 34) sind, die in der Lage sind, frei um ihre Achsen (36, 37) in geeigneten Löchern in dem Querträger (5) zu drehen und mit Mitteln (36, 39) versehen sind, um die relative Winkelposition der besagten Lagerbuchsen gegenüber dem Querträger (5) zu blockieren, wobei die Drehachsen der besagten zwei weiteren Ritzeln (6, 8) nicht mit den Drehachsen (36, 37) der besagten Lagerbuchsen (33, 34) zusammenfallen.

14. Fahrzeug nach einem der vorhergehenden Ansprüche, ferner Mittel umfassend, zum Blockieren der Drehung des Querträgers (5) mit Bezug auf dem Rahmen (1).

## Revendications

1. Véhicule basculant (200) avec au moins trois roues (2, 3, 4), deux (3, 4) d'elles étant directrices et disposées sur le même axe, comprenant:
- un guidon (16) fixé au châssis (1) dudit véhicule basculant au moyen d'une charnière cylindrique;
- deux tubes latéraux de tête (14, 15) auxquels sont liés par des charnières cylindriques deux tubes de direction latéraux (17, 18) auxquels sont liés lesdites roues directrices (3, 4),
- des moyens (19, 20, 21, 22, 220, 23, 24, 25, 26, 27) pour transmettre le mouvement de direction du guidon (16) auxdites roues directrices (3, 4); **caractérisé en ce que**
un premier pignon (7) est solidement fixé au châssis (1), et deux autres pignons (6, 8) sont configurés de manière à tourner avec des axes (28, 30) en parallèle à l'axe (29) dudit premier pignon (7) et sont fermement liés auxdits tubes latéraux de tête (14, 15), la position relative des axes (28, 29, 30) dudit premier et desdits deux autres pignons (6, 7, 8) étant définie par un élément transversal rigide (5) auquel sont liés avec possibilité de rotation ledit premier et lesdits deux autres pignons (6, 7, 8),
et que
ledit véhicule comprend en outre des moyens pour transmettre un mouvement à partir dudit premier pignon (7) auxdits deux autres pignons (6, 8), liés auxdits tubes latéraux de tête (14, 15).

2. Véhicule selon la revendication 1, **caractérisé en ce que** ledit premier et lesdits deux autres pignons (6, 7, 8) sont calées sur des arbres (11, 12, 13) qui sont articulés sur ledit élément transversal rigide (5) et sont fermement liés à des tubes de tête (14, 15) et au châssis (1).

3. Véhicule selon la revendication 1 ou 2, **caractérisé en ce que** lesdits moyens pour la transmission d'un mouvement comprennent une chaîne ou une courroie (150) ou une crémaillère ou des roues libres (9, 10) articulés audit élément transversal rigide (5) pour la transmission d'un mouvement à partir dudit premier pignon (7) fixé au châssis (1) auxdits deux autres pignons (6, 8) liés auxdits tubes latéraux de tête (14, 15).

4. Véhicule selon la revendication 1 ou 2, **caractérisé en ce que** ledit premier et lesdits deux autres pignons (6, 7, 8) sont des engrenages coniques et la transmission du mouvement entre ledit premier pignon (7) fixé au châssis (1) et lesdits deux autres pignons (6, 8) liés auxdits tubes de tête latéraux (14, 15) est réalisée au moyen de deux arbres (199, 201) capables de tourner et liés à l'élément transversal (5) et aux extrémités desquels des autres engrenages coniques (202, 203, 204, 205) sont calés, qui sont en prise avec ledit premier et lesdits deux autres pignons (6, 7, 8).

5. Véhicule selon la revendication 2, comprenant en outre un deuxième pignon (70) calé sur le même arbre de support (12) dudit premier pignon (7) fixé au châssis et **caractérisé en ce qu'**une première chaîne ou courroie (90) est configurée de telle manière à transmettre le mouvement du premier pignon (7) fixé au châssis à l'un (8) des deux autres pignons (6, 8) liés à un premier côté de tuyau de tête (15) et une deuxième chaîne ou courroie (100) est configurée de manière à transmettre le mouvement du deuxième pignon (70) fixé au châssis à l'autre (6) des deux autres pignons (6, 8) liés à un deuxième côté de tuyau de tête (14).

6. Véhicule selon l'une quelconque des revendications précédentes, **caractérisé en ce que** chacune desdites roues directrices (3, 4) disposées sur le même axe est liée au respectif tuyau de direction latérale (17, 18) au moyen d'une suspension indépendante.

7. Véhicule selon l'une quelconque des revendications précédentes, **caractérisé en ce que** ledit axe sur lequel sont disposées lesdites roues directrices (3, 4), est l'axe avant du véhicule.

8. Véhicule selon l'une quelconque des revendications précédentes, **caractérisé en ce que** les axes (28, 29, 30) dudit premier et desdits deux autres pignons (6, 7, 8) sont coplanaires.

9. Véhicule selon l'une quelconque des revendications 1 à 7, **caractérisé en ce que** les axes (28, 29, 30) dudit premier et desdits deux autres pignons (6, 7, 8) ne sont pas coplanaires.

10. Véhicule selon l'une quelconque des revendications précédentes, **caractérisé en ce que** le rapport de transmission de mouvement entre ledit premier pignon (7) fixé au châssis (1) et lesdits deux autres pignons (6, 8) liés audites tuyaux latéraux de tête (14 , 15), est égal à 1.

11. Véhicule selon l'une quelconque des revendications 1 à 9, **caractérisé en ce que** le rapport de transmission de mouvement entre ledit premier pignon (7) lié au châssis (1) et lesdits deux autres pignons (6, 8) liés auxdits tuyaux de tête latéraux (14, 15) est différent de 1.

12. Véhicule selon l'une quelconque des revendications précédentes, **caractérisé en ce que** la distance des axes (28, 30) desdits deux autres pignons (6, 8) liés auxdits tuyaux de tête latéraux (14, 15) par rapport à l'axe (29) dudit premier pignon (7) lié au châssis, est réglable.

13. Véhicule selon la revendication 12, **caractérisé en ce que** lesdits deux autres pignons (6, 8) peuvent tourner liés à des bagues (33, 34), libres de tourner autour de leurs axes (36, 37) dans des trous appropriés dans la traverse (5) et sont munies de moyens (36, 39) pour bloquer la position angulaire relative desdites bagues par rapport à la traverse (5), les axes de rotation desdits deux autres pignons (6, 8) ne coïncidant pas avec les axes de rotation (36, 37) desdites bagues (33, 34).

14. Véhicule selon l'une quelconque des revendications précédentes, comprenant en outre des moyens pour bloquer la rotation de la traverse (5) par rapport au châssis (1).
